(19) Europäisches Patentamt
European Patent Office
Office européen des brevets

(11) Veröffentlichungsnummer : **0 272 323 B1**

(12) **EUROPÄISCHE PATENTSCHRIFT**

(45) Veröffentlichungstag der Patentschrift :
03.07.91 Patentblatt 91/27

(21) Anmeldenummer : 86904465.1

(22) Anmeldetag : 30.04.86

(86) Internationale Anmeldenummer :
PCT/SU86/00037

(87) Internationale Veröffentlichungsnummer :
WO 87/06510 05.11.87 Gazette 87/24

(51) Int. Cl.⁵ : **B23K 7/06**

(54) **EINRICHTUNG ZUM THERMISCHEN ENTGRATEN VON STÜCKEN.**

(43) Veröffentlichungstag der Anmeldung :
29.06.88 Patentblatt 88/26

(45) Bekanntmachung des Hinweises auf die
Patenterteilung :
03.07.91 Patentblatt 91/27

(84) Benannte Vertragsstaaten :
DE FR GB IT SE

(56) Entgegenhaltungen :
DE-A- 2 440 041
DE-A- 2 525 012
DE-A- 3 314 397
GB-A- 1 170 017
US-A- 4 413 814
SOVIET INVENTIONS ILLUSTRATED, Sektion
M, Woche D40, 11. November 1981, Derwent
Publications Ltd, GB; & SU-A-795 823 (KHARK
AVIAT INST) 25-01-1981

(73) Patentinhaber : KHARKOVSKY AVIATSIONNY
INST. IMENI N.E. ZHUKOVSKOGO
ul. Chkalova, 17
Kharkov, 310191 (SU)

(72) Erfinder : BOZHKO, Valery Pavlovich
ul. Chkalova, 13-56
Kharkov, 310084 (SU)
Erfinder : YATSENKO, Sergei Vasilievich
pr. Pobedy, 76-116
Kharkov, 310204 (SU)
Erfinder : STRIZHENKO, Vitaly Evgenievich
ul. Osnovyanskaya, 56
Kharkov, 310010 (SU)
Erfinder : LOSEV, Alexei Vasilievich
Saltovskoe shosse, 240a-11
Kharkov, 310171 (SU)
Erfinder : PLESHKOV, Viktor Ivanovich
ul. Gvardeitsev Shironintsev, 26-204
Kharkov, 310120 (SU)
Erfinder : JUNASH, Viktor Maximovich
ul. Pervoi Konnoi Armii, 101
Kharkov, 310000 (SU)

(74) Vertreter : Finck, Dieter et al
Patentanwälte v. Füner, Ebbinghaus, Finck
Mariahilfplatz 2 & 3
W-8000 München 90 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf den Maschinenbau und betrifft Vorrichtungen zum thermischen Entgraten von Werkstücken.

## Zugrundeliegender Stand der Technik

Es ist eine Vorrichtung zum thermischen Entgraten von Werkstücken bekannt, die eine Arbeitskammer und einen Tisch mit Aufnahmen für Werkstücke enthält, wobei die Aufnahmen nacheinander die Beschickungsöffnung der Arbeitskammer hermetisch verschließen. Die Arbeitskammer ist mit Rohrleitungen für ein Oxydationsmittel und für Brennstoff verbunden und mit einer Zündkerze ausgerüstet (siehe US-Patentschrift, Nr. 3.666.252, N. KL. 266-2, bekanntgemacht 1972).

In dieser Vorrichtung erfolgt das Herauslassen der Abgase nach der Behandlung der Werkstücke durch die Beschickungsöffnung der Arbeitskammer, nachdem eine Aufnahme herabgelassen worden ist. Dabei können die Abgase erst dann abgelassen werden, wenn sie eine gewisse Zeit in der Kammer ausgehalten werden, d.h. erst dann, wenn ihre Temperatur durch Wärmeabgabe an die Wände der Kammer bis zu einem Niveau gesunken ist, das von der Beständigkeit des im Zwischenraum zwischen der Aufnahme und den Wänden der Kammer angebrachten elastischen Dichtungsrings abhängt. Die Dauer dieses Aushaltens kann 15 bis 40 sec betragen. Um diesen Wert wird der Aufenthalt der Werkstücke in der Kammer verlängert. Das führt neben dem Entgraten zu einem Überhitzen der Werkstücke bis auf Temperaturen, die die nach den technischen Bedingungen zulässigen Werte übersteigen, z.B. für Titan- und Aluminiumgußlegierungen, Plast und Gummi. Außerdem bereitet die Behandlung von Werkstücken mit dünnen Wänden und Rippen Schwierigkeiten durch ein mögliches Verwerfen infolge der Überhitzung. Das begrenzt die Nomenklatur der zu behandelnden Werkstücke, sowohl in Bezug auf das Material als auch auf die Abmessungen und die Form.

Es ist außerdem eine Vorrichtung zum thermischen Entgraten von Werkstücken bekannt, die eine Arbeitskammer und eine Aufnahme für deren hermetischen Verschluß, die miteinander bewegbar relativ zueinander verbunden sind, ein Einlaßventil zum Einlassen eines gasförmigen Brennstoffgemisches in die Kammer, eine Zündkerze und ein Auslaßventil zum Herauslassen der Verbrennungsprodukte aus der Kammer enthält (siehe SU-Urheberscheinschrift Nr. 988499, IPK B 23 K, bekanntgemacht 1983). In dieser Vorrichtung wird als Auslaßventil das in der Technik weit verbreitete Schema "Ventil-Sitz" verwendet, wo der hermetische Verschluß durch dichtes Anliegen an einem sowohl am Ventil als auch am Sitz eingeschliffenen Gurt erzeugt wird. Die bekannte Vorrichtung besitzt außerdem eine dünnwandige Hülse, die in der Kammer mit einem Spielraum relativ zu ihren Wänden angeordnet ist und die Lebensdauer der Vorrichtung durch Verhinderung einer direkten Einwirkung der hohen Temperatur auf daß Auslaßventil verlängert.

Bei Verwendung dieser Vorrichtung werden die Verbrennungsprodukte aus der Kammer unmittelbar nach dem Arbeitszyklus durch besprechen des Auslaßventils entfernt. Dabei verlängert zwar die Schutzhülse etwas die Lebensdauer des Auslaßventils, trotzdem sind ihr bestimmte Grenzen gesetzt, wonach Reparatur und Auswechseln der verschlissenen Teile notwendig wird.

Es ist erwähnenswert, daß die Konstruktionen der verwendeten Auslaßventile durch Kompliziertheit und eine Vielzahl von Einzelteilen gekennzeichnet sind, die für ihre Herstellung Engpaßmaterial und für die Steuerung zusätzliche Vorrichtungen (elektrisch gesteuerte Druckluftventile, Relais u.a.) benötigen.

## Offenbarung der Erfindung

Der Erfindung liegt die Aufgabe zugrunde, eine Vorrichtung zum thermischen Entgraten von Werkstücken zu schaffen, die ein Auslaßventil mit solch einer Konstruktion hat, die widerstandsfähig gegenüber der Einwirkung hoher Temperaturen und Drücke und unkompliziert ist und keine zusätzlichen komplizierten Systeme zur Steuerung erfordert.

Das Wesen der Erfindung besteht darin, daß eine Vorrichtung zum thermischen Entgraten von Werkstücken, die eine Arbeitskammer und eine Aufnahme zum hermetischen Verschließen der Kammer, die bewegbar relativ zueinander angeordnet sind, ein Einlaßventil zum Einlassen eines gasförmigen Brennstoffgemisches in die Kammer, eine Zündkerze in der kammer und ein Auslaßventil zum Herauslassen der Verbrehnungsprodukte aus der Kammer enthält, gemäß der Erfindung mit einem Behälter mit Wasser und einer darin angebrachten ringförmigen Kühlkammer ausgerüstet ist, wobei das Auslaßventil in Form eines Stabs mit einem durchgehenden, axialen Kanal ausgebildet ist, dessen eines Ende in den Raum der Kammer führt und dessen anderes Ende sich im Behälter mit Wasser befindet und von der ringförmigen Kühlkammer umgeben ist.

Es ist zweckmäßig, im Kanal einen zylindrischen Raum auszubilden, der konzentrisch zur Kühlkammer liegt.

Zur Erhöhung der Ansprechgeschwindigkeit des Ventils ist es zweckmäßig, im Kanal des Stabs in der von der Kühlkammer umgebenen Zone einen zylindrischen Stift mit einem Spielraum relativ zu den Wänden des Kanals anzubringen, der im Kanal mit Hilfe eines elastischen Elements bewegbar in Richtung der Achse des Kanals angeordnet ist.

Die nach der vorliegenden Erfindung angefertigte Vorrichtung zum thermischen Entgraten von Werkstücken ist durch eine hohe Sollbetriebszeit gekennzeichnet und hat ein Auslaßventil, dessen Konstruktion einfach und wiederstandsfähig gegen die Einwirkung hoher Temperaturen und Drücke ist, da das Dichtungselement im Ventil einen Eispfropfen darstellt, der die Form des Kanals im Stab annimmt. Die Vorrichtung eignet sich zur Behandlung eines breiten Sortiments von Werkstücken, sowohl in Bezug auf das verwendete Material als auch auf die Abmessungen und Form, da das Ansprechen des Auslaßventils gemäß der Erfindung, d.h. das Ausstoßen des Eispfropfens im Verlauf von Hundertstel einer Sekunde geschieht.

Die erfindungsgemäße Vorrichtung benötigt zur Steuerung der Funktion des Auslaßventils keinerlei Hilfssysteme.

Kurze Beschreibung der Zeichnungen

Im folgenden wird die Erfindung durch die Beschreibung konkreter Ausführungvarianten und anhand der beiliegenden Zeichnungen erläutert, und zwar zeigt :

Fig. 1 eine erfindungsgemäße Vorrichtung zum thermischen Entgraten von Werkstücken im Längsschnitt, das Auslaßventil ist geöffnet ;
Fig. 2 wie Fig. 1, das Auslaßventil ist geschlossen ;
Fig. 3 eine Variante der erfindungsgemäßen Vorrichtung zum thermischen Entgraten mit einem Stift im Kanal des Ventils im Längsschnitt, das Ventil ist geschlossen.

Beste Ausführungsvariante der Erfindung

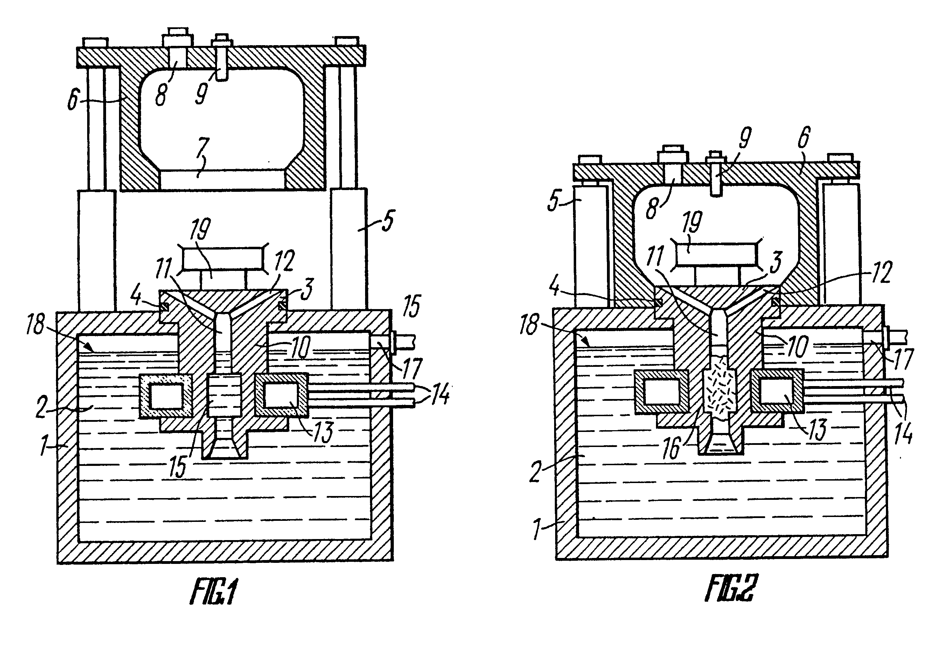

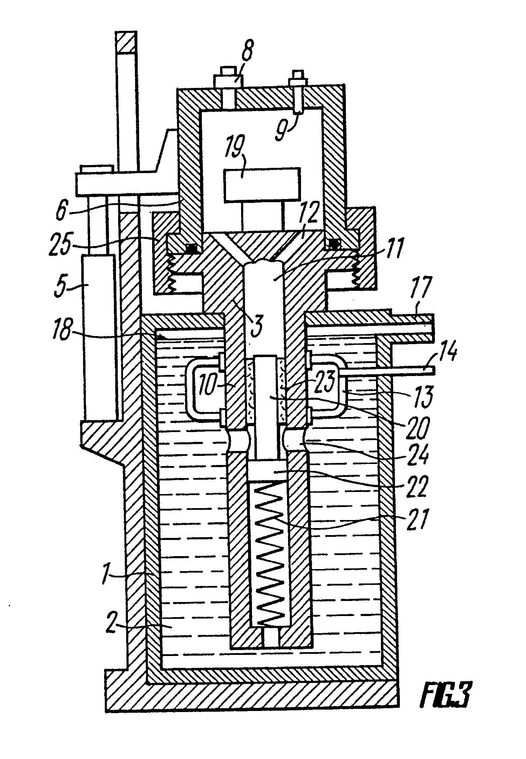

Die in Fig. 1, 2 abgebildete Vorrichtung zum thermischen Entgraten von Werkstücken enthält einen Behälter 1 mit einer Kühlflüssigkeit 2, in dessen obere Wand eine Aufnahme 3 unbeweglich eingebaut ist, die die Form eines runden Flansches hat, in dessen ringförmiger Rille ein elastischer Dichtungsring 4 liegt. Mit der gleichen oberen Hand des Behälters 1 ist mit Hilfe von Hydraulikzylindern 5 eine Arbeitskammer 6 verbunden, die eine den Abmessungen der Aufnahme 3 entsprechende Beschickungsöffnung 7 hat und die relativ zur Aufnahme 3 in senkrechter Richtung bewegbar angeordnet ist. In die Wand der Arbeitskammer 6 ist ein Einlaßventil 8 zum Einlassen eines gasförmigen Brennstoffgemisches in die Kammer 6 und eine Zündkerze 9 eingebaut. Die Aufnahme 3 bildet mit einem Stab 10 ein Ganzes, dessen eines Ende im Behälter 1 mit der Flüssigkelt 2 liegt und der einen durchgehenden axialen Kanal 11 hat., Der letztere steht mit dem Raum der Kammer 6 durch geneigte, durchgehende, in der Aufnahme 3 ausgeführte Öffnungen in Verbindung. Im Behälter 1 mit der Flüssigkeit 2 ist konzentrisch zum Stab 10 eine ringförmige Kühlkammer 13 mit Rohrleitungen 14 für die Zuführung eines Kühlmittels angeordnet. Der durchgehende Kanal 11 hat einen zylindrischen Raum 15, der konzentrisch zur ringförmigen Kühlkammer 13 angeordnet ist. Der Durchmesser des zylindrischen Raums 15 ist größer als der Durchmesser des durchgehenden Kanals 11. Der im Behälter 1 mit der Flüssigkeit 2 gelegene und von der Kühlkammer 13 umgebene Stab 10 mit dem durchgehenden Kanal 11 und dem Raum 15 übt die Funktion eines Auslaßventils aus, das dem Auslassen der Verbrennungsprodukte aus der Arbeitskammer 6 dient.

In Fig. 2 ist die gleiche Vorrichtung wie in Fig. 1 abgebildet, jedoch mit dem Unterschied, daß das Auslaßventil geschlossen ist – im Raum 15 und einem Teil des durchgehenden Kanals 11 befindet sich ein Eispfropfen 16.

Für die Ableitung der Verbrennungsprodukte aus der Vorrichtung hat der Behälter 1 einen Stutzen 17, der sich in der Wand des Behälters 1 über dem Spiegel 18 der Flüssigkeit 2 befindet. Das auf der Aufnahme 3 liegende, zu behandelnde Werkstück ist in Fig. 1 und 2 durch die Positionsnummer 19 gekennzeichnet.

In der in Fig. 3 abgebildeten Variante der Vorrichtung zum thermischen Entgraten von Werkstücken ist im Unterschied zu der in Fig. 1 und 2 abgebildeten Variante im Kanal 11 des Stabs 10 in der von der Kühlkammer 13 umgebenen Zone mit einem Spielraum relativ zu den Winden des Kanals 11 ein zylindrischer Stift 20 montiert, der im Kanal 11 mit Hilfe eines elastischen Elements aufgestellt ist und eine hin- und hergehende Bewegung entlang der Achse des Kanals 11 ausführen kann. in der beschriebenen Variante der Vorrichtung wird als elastisches Element eine zylindrische Feder 21 verwendet, auf die mit seiner Sohle 22 der Stift 20 aufliegt. Die Funktion eines elastischen Elements kann auch von Druckluft ausgeübt werden, die in den Raum unter dem Stift 20 geleitet wird. In Fig. 3 ist die Vorrichtung zum thermischen Entgraten von Werkstücken in dem Zustand gezeigt, bei dem das Auslaßventil geschlossen ist – im Spielraum zwischen dem Stift 20 und den Wänden des Kanals 11 befindet sich ein ringförmiger Eispfropfen 23. Zum Austritt der Verbrennungsprodukte aus dem Kanal 11 in den Behälter 1 sind in dieser Variante der Vorrichtung im Stab 10 radiale Öffnungen 24 gebohrt.

Die in Fig. 1, 2 abgebildete Variante der Vorrichtung zum thermischen Entgraten von Werkstücken funktioniert folgendermaßen. In der Ausgangsstellung sind die Kolbenstangen der Hydraulikzylinder 5 (Fig. 1) herausgeschoben, und die Arbeitskammer 6 ist über der Aufnahme 3 so weit angehoben, daß das Be- und Entladen der Wekstücke 19 vorgenommen werden kann. Der Arbeistszyklus beginnt mit dem Aufstellen des zu behandelnden Werkstücks 19 auf die Stirnfläche der Aufnahme 3. Dann ziehen die Hydraulikzylinder 5 die Kolbenstangen ein, und die starr mit ihnen verbundene Arbeitskammer 6 bewegt sich nach unten bis zur Verbindung mit der Aufnahme 3 (Fig. 2). Dabei muß die von den Hydraulikzylindern 5 aufgebrachte Kraft größer sein als die in der Kammer 6 bei maximalem Druck des verbrannten Gemisches wirkende Kraft.

Der hermetische Verschluß der Kammer 6 an der Beschickungsöffnung 7 wird durch den elastischen Dichtungsring 4 gewährleistet. Danach wird die Kühlkammer 13 in Betrieb genommen, und die im durchgehenden Kanal 11 befindliche Flüssigkeit 2, z.B. Wasser, beginnt in der Zone des zylindrischen Raums 16 zu gefrieren und einen Eispfropfen 16 (Fig. 2) zu bilden. Da die Umwandlung des Wassers in Eis mit einer Volumenvergrößerung verbunden ist, entstehen bei der Bildung des Eispfropfens 16 radiale Kräfte, wodurch der hermetische Verschluß des Kanals 11 gesichert ist. Die Abmessungen und die Form des zylindrischen Raums wird so ausgewählt, daß der entstehende Eispfropfen 16 nach seinen mechanischen Kennwerten der Einwirkung des Anfangsdrucks des Brennstoffgemisches in der Arbeitskammer 6 standhält und unter Einwirkung des Drucks der Verbrennungsprodukte zerstört wird.

Die bemessungen der Kühlkammer werden so ausgewählt, daß das Gefrieren der Wassermenge im Raum 15 in der für das Be- und Entladen der Werkstücke notwendigen Zeitspanne gewährleistet ist. In der Praxis beträgt diese Zeitspanne 25 bis 30 sec, was eine Leistung von nicht weniger als 2 Zyklen pro Minute gewährleistet.

Nach der Entstehung eines Eispfropfens 10 wird in den Raum der Arbeitskammer 6 mit Hilfe des Auslaßventils 8 ein Brennstoffgemisch geleitet, das dann durch die Kerze 9 gezündet wird. Durch das schnelle bewachsen des Drucks und der Temperatur kommt es zu einem Verbrennen und (oder) Abschmelzen der Grate des zu behandelnden Werkstücks 19 infolge ihrer entwickelten Oberfläche und relativ geringen Masse, während die entstehenden Gase mit hohem Druck und hoher Temperatur durch die Kanäle 12 und 11 auf den Eispfropfen 16 einwirken und ihn zerstören und die Eisreste in den mit Wasser gefüllten Behälter 1 entfernen. Beim Durchgang durch das Wasser kühlen sich die Gase ab, treten in den Raum im Behälter 1 über dem Wasser und werden von dort durch den Stutzen 17 aus der Vorrichtung entfernt. Das Wasser aus dem Behälter 1 füllt nach dem Ableiten der Gase wieder den Kanal 11 und den Raum 15, da der Wasserspiegel 18 im Behälter 1 höher liegt als der Raum 15.

Nach dem Ableiten der Gase stoßen die Hydraulikzylinder 5 die Kolbenstangen wieder heraus, und die Arbeitskammer 6 bewegt sich nach oben (Fig. 1), wodurch das behandelte Werkstück 19 weggenommen und auf die Aufnahme 3 ein neues Werkstück 19 gestellt werden kann. Da die Kühlkammer 13 nicht abgeschaltet wird, so lange die Vorrichtung in Betrieb ist, entsteht in der Zeit, die für das Anheben der Arbeitskammer, das Be- und Entladen der Werkstücke und das Herabsenken der Arbeitskammer 6 aufgewendet wird, im Raum 15 ein neuer Eispfropfen 16, der den Kanal 11 hermetisch verschließt.

Danach wiederholt sich der Arbeitszyklus.

Die in Fig. 3 abgebildete Variante der Vorrichtung funktioniert folgendermaßen.

In der Ausgangsstellung halten die Hydraulikzylinder 5 die Arbeitskammer 6 in der oberen Lage. Auf die Stirnfläche der Aufnahme 3 stellt man daszu behandelnde Werkstück. In dieser Zeit befindet sich der Stift 20 unter Einwirkung der Feder 21 in der von der Kühlkammer 13 umgebenen Zone. Im Spielraum zwischen dem Körper des Stifts 20 und den Wänden des Kanals 11 bildet sich ein ringförmiger Eispfropfen 23. Danach senken die Hydraulikzylinder 5 die Kammer 6 auf die Aufnahme 3 herab. Der Ring 25 wird mit Hilfe eines in der Zeichnung nicht abgebildeten Mechanismus gedreht und bildet einen Bajonettverschluß, der die Kammer 6 mit der Aufnahme 3 hermetisch verbindet. Danach gibt man das Brennstoffgemisch durch das Ventil 8 in die Kammer 6 und zündet es mit Hilfe der Zündkerze 9. Die brennenden Gase vollziehen das thermische Entgraten des zu behandelnden Werkstücks 19 in der Kammer 6. Der erhöhte Druck der Verbrennungsprodukte wirkt auf die Stirnfläche des Stifts 20 und den Eispfropfen 23 ein und zerstört den letzteren. Der Stift 20 geht unter Einwirkung des Drucks der Gase nach unten. Das von dem Stift 20 verdrängte Wasser entweicht durch eine Öffnung am unteren Ende des Kanals 11 in den Behälter 1 und dämpft so die Schlagwirkung des Stifts 20 auf die Feder 21, die beim schlagartigen Ansteigen des Drucks infolge des explosionsartigen Abbrennens des Gemisches in der Kammer 6 entsteht. Die Verbrennungsprodukte gelangen aus der Kammer 6 durch den freigewordenen Kanal 11 und die radialen Öffnungen 24 in den Behälter 1, gehen durch die Flüssigkeit 2, kühlen sich dabei ab und entweichen durch den Stutzen 17 in die Atmosphäre. Da die Stirnfläche des Stifts 20 der intensiven Erosionseinwirkung der Strahlen der Verbrennungsprodukte ausgesetzt ist, wird die Oberflächenschicht der Stirnfläche teilwelse zerstört. Das behindert jedoch nicht die normale Funktion des Stifts 20 als Füllelement des Auspuffventils, in dem eine Eisschicht die Rolle eines Dichtungselements ausübt, die bei jedem Zyklus, unabhängig von der Oberflächengüte des Stifts 20 aufgewachsen wird. Nach dem Entfernen der Verbrennungsprodukte wird der Ring 25 gedreht, die Kammer 6 geht nach oben und legt die Aufnahme 3 frei zum benehmen und Aufstellen von zu behandelnden Werkstücken.

Diese Variante der Vorrichtung ist im Vergleich zu der in Fig. 1, 2 abgebildeten Variante durch eine größere Schnelligkeit gekennzeichnet und aufgrund einer Verkürzung der für die Bildung des Eispropfens 23 notwendigen Zeit infolge einer Verringerung der Menge der zu gefrierenden Flüssigkeit.

Die Abmessungen des Stifts 20 und der Durchmesser des axialen Kanals 11 werden ausgehend von der Gewährleistung solcher Kennwerte des ringförmigen Eispfropfens 23 festgelegt, die ein einwandfreies Entgraten der Werkstücke garantiert.

Auf diese Weise übt in der erfindungsgemäßen Vorrichtung die Funktion eines Auslaßventils ein Eispfropfen aus, der sich in der Auspufföffnung nach jedem Arbeitszyklus bildet.

Der Verschleiß der Oberfläche des Auspuffkanals 11 wird automatisch beim Gefrieren jeder neuen Portion des aus dem Behälter 1 in den Kanal 11 gelangenden Wassers kompensiert. Das ermöglicht eine wesentliche Vereinfachung der Konstruktion und eine Verlängerung der Sollbetriebszeit der Vorrichtung um 8 bis 10 mal.

Da der Eispfropfen unter Einwirkung der unter hohem Druck stehenden heißen Gase im Verlauf von Hundertsteln einer Sekunde zerstört wird, verringert sich erheblich die Auspuffperiode und folglich auch die Zeitspanne, in deren Verlauf die heißen Gase auf die zu behandelnden Werkstücke einwirken. Das ermöglicht eine Erweiterung der Nomenklatur der zu behandelnden Werkstoffe und Werkstücke und vermeidet die Entstehung von Ausschuß infolge Überhitzung der Werkstücke.

Industrielle Anwendbarkeit

Die Erfindung kann in Maschinenbaubetrieben zum putzen von Werkstücken aus Metall und Plast verwendet werden.

**Ansprüche**

1. Vorrichtung zum thermischen Entgraten von Werkstücken (19), die eine Arbeitskammer (6) und eine Aufnahme (3) zum hermetischen Verschließen der Kammer (6), die bewegbar relativ zueinander angeordnet sind, ein Einlaßventil (8) zum Einlassen eines gasförmigen Brennstoffgemisches in die Kammer (6), eine Zündkerze (9) in der Kammer (6) und ein Auslaßventil zum Herauslassen der Verbrennungsprodukte aus der Kammer (6) enthält, dadurch **gekennzeichnet**, daß sie mit einem Behälter (1) mit einer Flüssigkeit (2) und einer darin angebrachten ringförmigen Kühlkammer (13) ausgerüstet ist, wobei das Auslaßventil in Form eines Stabs (10) mit einem durchgehenden axialen Kanal (11) ausgebildet ist, dessen eines Ende in den Raum der Kammer (6) führt und dessen anderes Ende sich im Behälter (1) mit Flüssigkeit (2) befindet und von der ringförmigen Kühlkammer (13) umgeben ist.

2. Vorrichtung zum thermischen Entgraten von Werkstücken nach Anspruch 1, dadurch **gekennzeichnet**, daß der durchgehende Kanal (11) einen zylindrischen Raum (15) hat, der konzentrisch zur Kühlkammer (13) liegt.

3. Vorrichtung zum thermischen Entgraten von Werkstücken nach Anspruch 1, dadurch **gekennzeichnet**, daß im Kanal (11) des Stabs (10) in der von der Kühlkammmer (13) umgebenen Zone ein zylindrischer Stift (20) mit einem Spielraum relativ zu den Wänden des Kanals (11) angebracht ist, der im Kanal (11) mit Hilfe eines elastischen Elements bewegbar in Richtung der Achse des Kanals (11) angeordnet ist.

**Revendications**

1. Dispositif pour l'ébarbage thermique de pièces (19), qui comporte une chambre de travail (6) et un logement (3) pour la fermeture hermétique de la chambre (6), qui sont agencés mobiles l'un par rapport à l'autre, une soupape d'entrée (8) pour l'introduction d'un mélange combustible gazeux dans la chambre (6), une bougie d'allumage (9) dans la chambre (6) et une soupape de sortie pour la sortie des produits de combustion de la chambre (6), caractérisé en ce qu'il est équipé d'un récipient (1) avec un liquide (2) et une chambre froide annulaire (13) qui y est prévue, la soupape de sortie étant configurée sous la forme d'une barre (10) avec un canal axial continu (11), dont une extrémité mène à l'intérieur de la chambre (6) et dont l'autre extrémité se trouve dans le récipient (1) avec le liquide (2) et est entourée de la chambre annulaire de refroidissement (13).

2. Dispositif d'ébarbage thermique de pièces selon la revendication 1, caractérisé en ce que le canal continu (11) a un espace cylindrique (15) qui est concentrique à la chambre de refroidissement (13).

3. Dispositif d'ébarbage thermique de pièces selon la revendication 1, caractérisé en ce que dans le canal (11) de la barre (10), dans la zone entourée de la chambre de refroidissement (13), est prévue une tige cylindrique (20) avec un jeu relativement aux parois du canal (11), laquelle tige est agencée en étant mobile dans le canal (11) au moyen d'un élément élastique, dans la direction de l'axe du canal (11).

**Claims**

1. A device for thermally deburring workpieces (19), containing a working chamber (6) and a receptacle (3) for hermetically closing the chamber (6), which are arranged so as to be movable relative to each other, an inlet valve (8) for letting a gaseous fuel mixture into the chamber (6), a spark plug (9) in the chamber (6) and an outlet valve for letting the combustion products out of the chamber (6), characterised in that it is equipped with a container (1) with a fluid (2) and with an annular cooling chamber (13) arranged therein, the outlet valve being in the shape of a rod (10) with a through-going axial channel (11), one end of which leads into the space of the chamber (6) and the other end of which is in the container (1) with fluid (2) and is surrounded by the annular cooling chamber (13).

2. A device for thermally deburring workpieces according to Claim 1, characterised in that the through channel (11) has a cylindrical space (15) lying concentric to the cooling chamber (13).

3. A device for thermally deburring workpieces according to Claim 1, characterised in that a cylindrical pin (20) is arranged in the channel (11) of the rod (10) in the area surrounded by the cooling chamber (13), with a clearance relative to the walls of the channel (11), which pin is arranged in the channel (11) so as to be movable in the direction of the axis of the channel (11) by means of a resilient element.

FIG.1

FIG.2

FIG3